# EUROPÄISCHE PATENTSCHRIFT

(11) **EP 3 093 172 B1**
(45) Veröffentlichungstag und Bekanntmachung des Hinweises auf die Patenterteilung: **22.11.2017**
(21) Anmeldenummer: 16401016.7
(22) Anmeldetag: 07.03.2016
(51) Int. Cl.: B60H 1/00, F28F 9/00

(54) **ZUSAMMENBAUANORDNUNG EINES WÄRMETAUSCHERS**
ASSEMBLY ARRANGEMENT OF A HEAT EXCHANGER
SYSTEME D'ASSEMBLAGE D'UN ECHANGEUR THERMIQUE

(30) Priorität: 17.03.2015 DE 102015103908
(43) Veröffentlichungstag der Anmeldung: 16.11.2016
(73) Patentinhaber: Denso Automotive Deutschland GmbH, 85386 Eching (DE)
(72) Erfinder: Priesemuth, Roland, 85386 Eching (DE); Györög, Tibor, 85386 Eching (DE)
(74) Vertreter: Stalder, Wolfgang

(56) Entgegenhaltungen:
- EP-A1- 3 025 883
- DE-A1- 19 918 167
- DE-A1-102014 207 487
- JP-A- 2007 283 824

## Beschreibung

### Patentansprüche für folgende(n) Vertragsstaat(en) : DE

Die vorliegende Erfindung betrifft eine Zusammenbauanordnung eines Wärmetauschers für den Einbau in das Gehäuse einer Klimaanlage eines Kraftfahrzeugs. Die Zusammenbauanordnung umfasst einen Wärmetauscher, dessen Außenform durch eine Lufteintrittsseite, eine rückseitig dazu parallel gelegene Luftaustrittsseite und eine seitlich dazu umlaufende Begrenzung definiert ist, und einen Dichtungszusammenbau, mittels welchem die seitliche Begrenzung des Wärmetauschers luftdicht und schwingungsisoliert in einem luftführenden Kanal des Gehäuses der Klimaanlage einbaubar ist. Die vorliegende Erfindung betrifft ferner ein Verfahren zum Zusammenbauen einer Kraftfahrzeugklimaanlage mit einer solchen Zusammenbauanordnung.

Für Kraftfahrzeugklimaanlagen werden verschiedene Arten von Wärmetauschern verbaut, beispielsweise Verdampfer und Kondensatoren eines Kältemittelkreislaufs, welche für einen Kühlbetrieb, Wärmepumpenbetrieb und/oder Entfeuchtungsbetrieb eingesetzt werden können. Zudem sind auch fluidbasierte Wärmetauscher bekannt. Hierzu zählen beispielsweise Heizwärmetauscher, welche von dem Kühlwasser des Motors durchströmt werden, oder Kühlwärmetauscher, welche in einem Sekundärkeislauf von einem gekühlten, beispielsweise wasserbasierten Kühlmittel durchströmt werden, welches seinerseits mit einem Kältemittel-Primarkreislauf in wärmetauschendem Kontakt steht.

Es kommt regelmäßig vor, dass für einen bestimmten Kraftfahrzeugtyp je nach Ausstattung oder Zielmarkt eine unterschiedliche Klimatisierungsanforderung vorliegt, sodass ggf. mehrere Varianten unterschiedlicher Leistungsklasse in einer an sich sonst gleichartigen Klimaanlage zum Einsatz kommen müssen. Ferner werden für unterschiedliche Märkte gegebenenfalls jeweils Kältemittelkreisläufe mit unterschiedlichem Kältemittel - z.B. R744 alternativ zu R1234yf - eingesetzt, verbindlich vorgeschrieben oder deren Verwendung untersagt. In diesen Fällen können die verwendeten Wärmetauscher selbst bei gleicher Funktion und/oder gleicher Leistungsklasse in unterschiedlichen Zielmärten voneinander abweichende Größen (d.h. Breiten, Höhen und/oder Dicken) aufweisen.

Um dieser Variantenvielfalt zu begegnen, sind unter anderem diverse Aufnahmevorrichtungen sowie Distanzelemente und Einsätze zum Anpassen an die unterschiedliche Größe der Wärmetauschervarianten bekannt, wie dies z.B. in der DE 10 2012 218 089 A1 beschrieben ist. Es muss bei einer solchen Anpassung jedoch außerdem beachtet werden, dass der Wärmetauscher im luftführenden Kanal des Gehäuses der Kraftfahrzeugklimaanlage in geeigneter Weise abgedichtet und schwingungsentkoppelt werden muss. Die Konstruktion einer zufriedenstellenden Schwingungsentkopplung und Luftdichtigkeit am Rande des Wärmetauschers erfordert zumeist einen erheblichen Entwicklungsaufwand.

In der DE 199 18 167 A1 wird vorgeschlagen, zur körperschallisolierten Lagerung und Abdichtung gegen Leckluft einen Wärmetauscher mit einem Abdichtelement aus Partikelschaum zu umgeben, wobei einzelne mit einander verbundene Abschnitte mittels Filmscharnieren um den Wärmetauscher gefaltet werden können.

In der nachveröffentlichten DE 10 2014 207 487 A1 wird ein Baukastensystem für eine Verdampfereinrichtung offenbart, welche eine Adaptereinrichtung aufweist zum Ausgleichen von Maßabweichungen des in einem Gehäuse aufzunehmenden Wärmetauschers.

Es ist die Aufgabe der vorliegenden Erfindung, eine Zusammenbauanordnung der eingangs genannten Art bereitzustellen, welche eine einfache Montage der Kraftfahrzeugklimaanlage unterstützt und bei welcher insbesondere die Verwendung verschiedener Varianten von Wärmetauschern mit möglichst wenig Mehraufwand verbunden ist.

Diese Aufgabe wird durch eine Zusammenbauanordnung mit den Merkmalen des Anspruchs 1 gelöst. Vorteilhafte Aus- und Weiterbildungen ergeben sich aus den abhängigen Ansprüchen. Die einstückige und vollumfängliche Ummantelung ermöglicht es, den umfänglichen Rand der Zusammenbauanordnung bereits an die physische Form des luftführenden Kanals im Gehäuse der Klimaanlage in einem Stück vorzusehen. Dies erlaubt nicht nur eine einfache Montage, sondern reduziert auch mögliche Anpassungen zum luftdichten Abschließen der Zusammenbauanordnung gegenüber dem luftführenden Kanal. Ergebnisse von früheren Entwicklungen für die Dichtung und Schwingungsentkopplung können ggf. wiederverwendet werden. Außerdem kann durch das einstückige Außenteil die Teileanzahl reduziert werden, welches die Handhabung bei der Herstellung und Vormontage vereinfacht.

Vollumfänglich bedeutet im Sinne der Erfindung, dass der Wärmetauscher entlang der seitlichen Begrenzung zusammenhängend von dem Dichtungszusammenbau umgeben ist. Dabei können aber unter anderem die Zuleitungen zum oder die Ableitungen aus dem Wärmetauscher lokal den Dichtungszusammenbau lochartig oder schlitzartig durchbrechen.

Gemäß der Erfindung umfasst der Dichtungszusammenbau einen Standardrahmen, in welchem der Wärmetauscher durch Spritzgießen eingeschlossen ist. Das Einspritzen ist ein einfacher Verfahrensschritt, durch welchen auf weitere manuelle Montageschritte zur Fertigstellung des im Dichtungszusammenbau dicht und schwingungsisoliert integrierten Wärmetauschers verzichtet werden kann. Als weiterer Schritt bedarf es lediglich dem Einpassen der so erhaltenen Zusammenbauanordnung im Luftkanal.

Bei einem alternativen Vergleichsbeispiel ist der Außenteil des Dichtungszusammenbaus ein auf- und zusammenklappbarer Rahmen, welcher gegeneinander bewegliche Schenkel aufweist. Der Rahmen kann beispielsweise aus vier geraden Schenkeln für je eine Kante des Wärmetauschers bestehen, wobei alle Schenkel gegeneinander beweglich sind. Alternativ kann aber auch nur einer oder zwei der Schenkel gerade sein und der restliche Teil als L-förmiger oder U-förmiger Schenkel starr ausgebildet sein. Diese zweite Ausführungsform ermöglicht einerseits eine einfache Montage durch Herumlegen und Zusammenklappen des Rahmens, andererseits kann der Rahmen ggf. wieder geöffnet und der ummantelte Wärmetauscher ausgetauscht werden.

Bei dem Vergleichsbeispiel können wenigstens zwei benachbarte Schenkel des Rahmens durch Filmscharniere miteinander verbunden sein. Dies erlaubt eine einfache Gelenkbildung aus demselben Material.

Es kann dann ferner vorgesehen sein, dass der Dichtungszusammenbau zusätzlich wenigstens einen Einsatz aufweist, welcher in die Innenseite des Außenteils einsetzbar ist und in zusammengebautem Zustand fest und dicht zwischen dem Außenteil und dem Wärmetauscher angeordnet ist. Hierdurch lässt sich eine leichte Anpassbarkeit an verschiedene Varianten von Wärmetauschern erreichen. Bei einer Weiterentwicklung einer bestehenden Klimaanlage kann das bisherige Dichtungs- und Schwingungsentkopplungskonzept gegenüber dem luftführenden Kanal der Klimaanlage übernommen werden und lediglich die Dichtung und die Schwingungsentkopplung gegenüber der Innenseite des Rahmens an einen neu zu verwendenden Wärmetauscher angepasst werden. Ein solcher Einsatz besteht vorteilhafterweise aus einem elastischen Material, z.B. einem Formschaum.

Der Standardrahmen oder der zusammenklappbare Rahmen sind typischerweise aus einem harten, unelastischem Material, z.B. aus Polypropylen, wobei aber ggf. auch formstabile aber weichere Materialien wie z.B. Formschaum verwendet werden können. Insbesondere können die Rahmen aus einer Kombination aus verschiedenen Materialien, elastischen wie unelastischen Elementen bestehen.

Der Außenteil des Dichtungszusammenbaus weist typischerweise eine im Wesentlichen ebene Oberfläche auf, sodass er sich an die typischerweise auch ebenen Kanalwandungen des luftführenden Kanals der Klimaanlage anpasst. Insbesondere kann eine ebene und auch glatte Oberfläche vorgesehen sein, um ein möglichst kraftsparendes Einschieben in den luftführenden Kanal der Klimaanlage zu ermöglichen. Gemäß einer Weiterbildung der Erfindung ist dabei vorgesehen, dass der Außenteil des Dichtungszusammenbaus ein entlang der seitlichen Begrenzung laufendes Nut-Feder-Mittel aufweist, welches an ein entsprechendes Nut-Feder-Mittel in dem luftführenden Kanal des Gehäuses der Klimaanlage angepasst ist. Hierdurch wird bereits beim Einschieben die ggf. benötigte Luftdichtigkeit zwischen Zusammenbauanordnung und der Innenwand des Klimagehäuses erreicht. Die Nut-Feder-Verbindung kann dabei umlaufend oder ggf. auch unterbrochen sein. Die Nut kann entweder in der Außenseite des Dichtungszusammenbaus oder in der Wandung des Klimageräts vorgesehen sein. Es können auch zwei oder mehrere parallel verlaufende Nut-Feder-Verbindungen vorgesehen sein.

Ein Verfahren zum Zusammenbauen einer Kraftfahrzeugklimaanlage kann nun folgende aufeinanderfolgende Schritte umfassen: Bestimmen einer Ziel-Außenform eines Dichtungszusammenbaus, welche für den luftdichten und schwingungsisolierten Einbau eines Wärmetauschers in Bezug auf eine vorgesehene Einbaulage in einen luftführenden Kanal des Gehäuses einer Klimaanlage geeignet ist. Nachfolgend ein vollumfängliches Ummanteln wenigstens der seitlichen Begrenzung des Wärmetauschers mit einem einstückigen Dichtungszusammenbau und anschließendem luftdichten und schwingungsisolierten Einbauen des mit dem Dichtungszusammenbau ummantelten Wärmetauschers in die vorgesehene Einbaulage des luftführenden Kanals des Gehäuses der Klimaanlage.

Optional umfasst das vollumfängliche Ummanteln des Wärmetauschers folgenden Schritt: Das Aufnehmen des Wärmetauschers in einem Standardrahmen und das Einschließen des Wärmetauschers in dem Standardrahmen mittels Spritzgießen.

Alternativ dazu ist bei dem Verfahren optional vorgesehen, dass für das vollumfängliche Ummanteln ein auf- und zusammenklappbarer Rahmen mit gegeneinander beweglichen Schenkeln verwendet wird, vor dem vollumfänglichen Ummanteln wenigstens ein Einsatz in die Innenseite des Rahmens eingesetzt wird und beim Zusammenklappen des Rahmens der wenigstens eine Einsatz fest und dicht zwischen dem Rahmen und dem Wärmetauscher angeordnet wird.

Die Erfindung wird nun anhand von Ausführungsbeispielen und mit Bezug zu den Figuren näher erläutert.
- Die Figuren 1A - 1B: zeigen schematisch den Aufbau einer Zusammenbauanordnung eines Wärmetauschers gemäß einem Ausführungsbeispiel der Erfindung in zwei verschiedenen seitlichen Schnittebenen,
- die Figuren 2A - 2C: zeigen schematisch verschiedene Wärmetauscher in demselben Außenteil des Dichtungszusammenbaus gemäß Ausführungsbeispielen der Erfindung,
- die Figuren 3A - 3B: zeigen schematisch verschiedene Nut-Feder-Mittel, wie diese gemäß Ausführungsvarianten der Erfindung vorgesehen sind, und
- die Figuren 4A - 4B: zeigen Verfahrensschritte des Zusammenbaus eines Vergleichsbeispiels.

Die folgenden Ausführungsbeispiele zeigen als Wärmetauscher verschiedene Arten von Verdampfern. Die Erfindung ist jedoch nicht auf Verdampfer beschränkt, sondern kann auch auf beliebig andere Wärmetauscher, wie beispielsweise Kondensatoren oder Heizwärmetauscher, angewendet werden. Die unten im Zusammenhang mit einem Verdampfer erläuterten Merkmale und Verfahrensschritte lassen sich somit auch auf diese anderen Typen von Wärmetauschern übertragen.

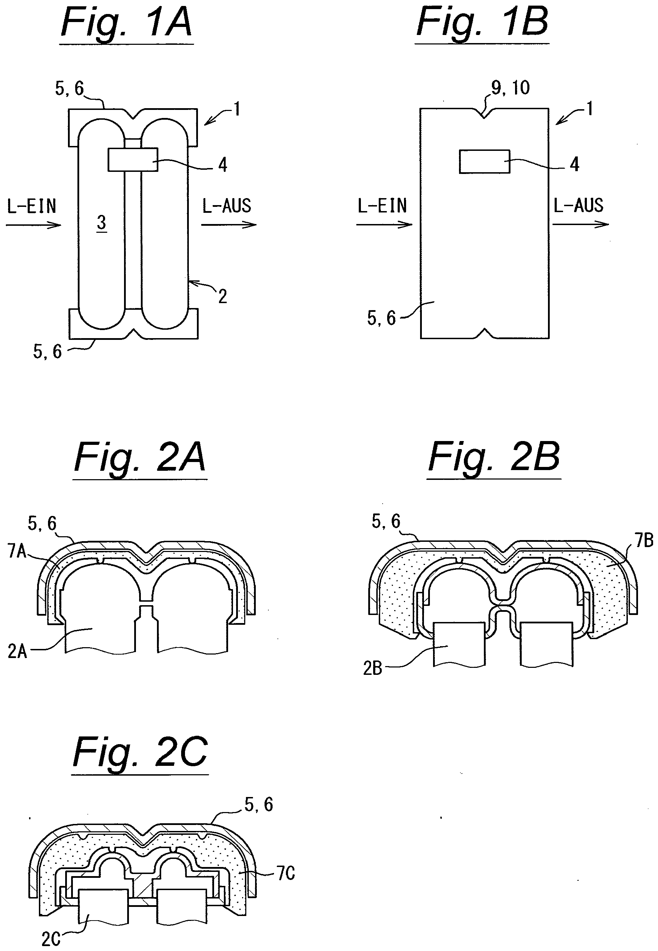

In der Figur 1A ist schematisch der Aufbau einer Zusammenbauanordnung 1 eines Verdampfers 2 gemäß einem Ausführungsbeispiel der Erfindung dargestellt. Die Figur 1A zeigt dabei einen seitlichen Schnitt durch die Zusammenbauanordnung 1 in der Nähe der seitlichen Begrenzung 3 des Verdampfers 2 (mit der vorgesehenen Lufteintrittsseite L-EIN auf der linken Seite und der Luftaustrittsseite L-AUS auf der rechten Seite). Die seitliche Begrenzung 3 wird dabei typischerweise von vier geradlinigen Seiten gebildet. Der Verdampfer 2 ist beispielsweise an den Seiten durch geradlinige, ebene Seitenbleche bzw. oben und unten durch je einen abgerundeten Sammeltank gebildet. Ferner tritt aus der seitlichen Umrandung ein Anschlussblock 4 für die Zuleitung in und die Ableitung aus dem Verdampfer 2 hervor.

Erfindungsgemäß ist die seitliche Begrenzung 3 des Verdampfers 2 einstückig und vollumfänglich mit einem Rahmen 5, 6 ummantelt. Während durch die Schnittansicht in der Fig. 1A nur die Ober- und Unterseite dieses Rahmens 5, 6 sichtbar sind, ist in der Seitenansicht gemäß Fig. 1B zumindest auch der eine Seitenabschnitt dieses Rahmens 5, 6 zu sehen. Die zeichnerisch zugewandte Seite des Rahmens 5, 6 weist eine kleine Öffnung auf, welche in zusammengebautem Zustand durch den Anschlussblock 4 durchbrochen wird.

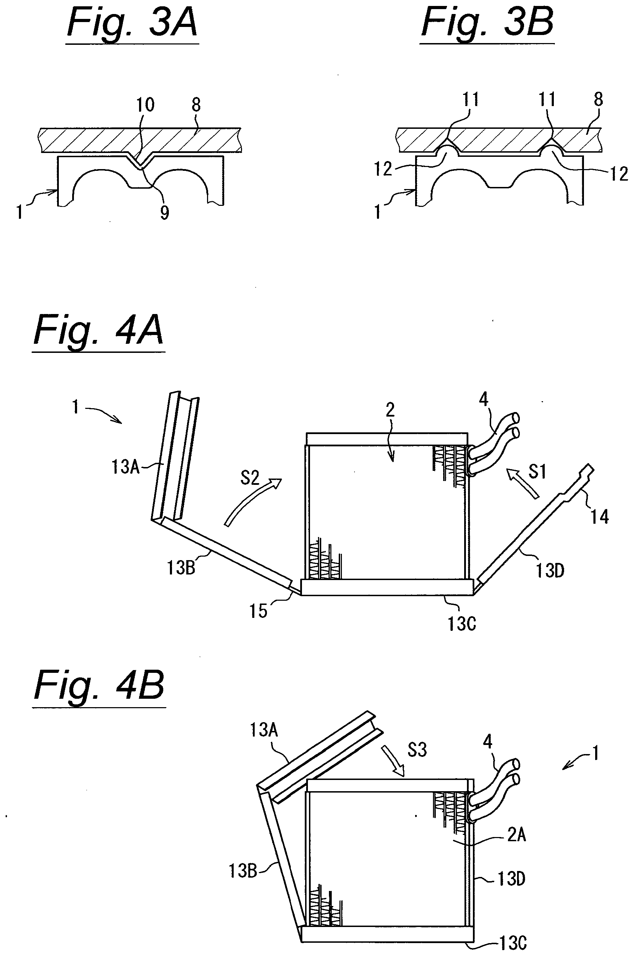

In dem dargestellten Ausführungsbeispiel weist der Rahmen 5, 6 an der Ober- und Unterseite, oder optional auch umlaufend an den Seitenabschnitten, ein Nut-Feder-Mittel 9, 10 auf, dessen Funktion weiter unten mit Bezug zu den Fig. 3A und 3B noch näher erläutert wird.

In den Figuren 2A - 2C ist schematisch dargestellt, wie verschiedene Verdampfer-Typen in demselben Rahmen 5, 6 luftdicht und schwingungsisoliert eingebaut werden können. Die Verdampfer 2A, 2B sind jeweils Verdampfer für einen Kältemittelkreislauf mit R1234yf, aber unterschiedlicher Größe und Leistungsklasse. Der Verdampfer 2A hat im gezeigten Beispiel eine Breite von 50mm, der Verdampfer 2B hingegen nur 38mm. Der Verdampfer 2C ist ein Verdampfer für einen Kältemittelkreislauf mit R744. Dieser besitzt im Gegensatz zu den beiden zuvor genannten Verdampfern 2A, 2B einen anderen Aufbau und eine andere Höhe und Breite. Mithilfe des Rahmens 5, 6 ist nun eine Anpassung an diese verschiedene Größen einfach beherrschbar. Die Anpassung der Zusammenbauanordnung 1 nach außen zum luftdicht und schwingungsisolierten Einpassen in den Luftkanal einer Kraftfahrzeugklimaanlage muss nur einmal für alle drei Typen gemacht werden. Damit ist das Bereitstellen von Klimaanlagen mit Bestückungen verschiedener Verdampfer 2A - 2C wenig entwicklungsintensiv. Ebenso fällt ein Typenwechsel von einem bestehenden Verdampfer, z.B. des Typs 2A, auf einen Nachfolge-Verdampfer, z.B. des Typs 2B oder 2C, ohne größeren Entwicklungsaufwand relativ leicht.

Die Anpassung an diese verschiedenen Verdampfer-Typen 2A - 2C erfolgt nun zwischen der umlaufenden Begrenzung 3 des jeweiligen Verdampfers 2A - 2C und der Innenseite des Rahmens 5, 6 statt. Dazu sind Einlagen 7A - 7C vorgesehen, welche zwischen dem jeweiligen Verdampfer 2A - 2C und dem Rahmen 5, 6 angebracht werden und den Verdampfer 2A - 2C fest und luftdicht in dem Rahmen 5, 6 einschließen. Im gezeigten Beispiel sind die Einsätze 7A - 7C aus Formschaum hergestellt, wobei allgemein auch andere Materialien verwendbar sind. Es können beispielsweise auch Einsätze 7 aus einer Kombination von elastischen und harten Kunststoffen bereitgestellt werden.

Die Außenseite des Rahmens 5, 6 weist in den gezeigten Ausführungsbeispielen eine im Wesentlichen ebene Oberfläche auf. Sie ist insbesondere glatt und typischerweise aus demselben oder ähnlichen Material wie der das Gehäuse für die luftführenden Kanäle der Kraftfahrzeugklimaanlage. Der Rahmen ist beispielsweise auf Polypropylen (PP).

In den Fig. 3A - 3B wird die Funktion der Nut-Feder-Mittel 9 - 12 näher erläutert. Um eine vereinfachte Montage der Zusammenbauanordnung 1 im Gehäuse der Klimaanlage zu ermöglichen, sind an einer oder an mehreren Seiten des Rahmens 5, 6 und an der entsprechenden Stelle an der Innenseite des Luftkanals 8 Nuten 9, 11 bzw. Federn 10, 12 vorgesehen.

In einer Ausführungsvariante gemäß Fig. 3A ist an der Außenseite der Zusammenbauanordnung 1 eine Nut 9 vorgesehen, welche sich an der Oberseite und ggf. auch an den anderen Seiten geradlinig erstreckt. Passgenau dazu ist im Luftkanal 8 eine Feder 10 vorgesehen. Die Zusammenbauanordnung 1 des Verdampfers 2 im Rahmen 5, 6 kann nun durch einfaches seitliches Einschieben in die geeignete Position im Luftkanal 8 erfolgen.

Alternativ zu der Figur 3A ist eine weitere Ausführungsvariante in der Fig. 3B dargestellt. Gemäß dieser Ausführungsvariante weist die Rahmenaußenseite zwei im Profil halbkreisförmige Federn 12 auf, welche in entsprechend positionierte Nuten 11 im Luftkanal 8 einbringbar sind. Die Federn 12 können dabei aus einem elastischen Material sein und durch leichten Andruck in die Nuten 11 für eine verbesserte Dichtigkeit sorgen.

Die mit Bezug zu den Fig. 3A und 3B gezeigten Nut-Feder-Verbindungen zwischen Zusammenbauanordnung 1 und Luftkanal 8 können entsprechend modifiziert und einzelne Merkmale entsprechend miteinander kombiniert werden. Insbesondere können-mehrere parallel zueinander verlaufende Nuten/ Feder vorgesehen sein oder auch Nut und Feder an einer Oberfläche abwechseln. Je nach Bedarf können auch weitere Dicht- und Schwingungsentkopplungsmittel zwischen der Innenwand des Luftkanals 8 und der Zusammenbauanordnung 1 vorgesehen sein.

Durch den Rahmen 5, 6 ist die Außenform der Zusammenbauanordnung 1 definiert. Wie bereits oben erwähnt ermöglicht dies einerseits, auf die Ergebnisse früherer Entwicklungen von Klimaanlagen zurückzugreifen und damit den Entwicklungsaufwand bzgl. Der Dichtungs- und Schwingungsentkopplung zu reduzieren. Dazu wird die Ziel-Außenform des Dichtungszusammenbaus beispielsweise von einem Vorgängerprojekt übernommen bzw. entsprechend re-dimensioniert. Wenn die Außengeometrie des Dichtungszusammenbaus und die Kanalwandgeometrie an der vorgesehenen Einbaulage gleich ist, muss zumindest an dieser Berührfläche nichts mehr angepasst werden. Der Verdampfer 2 wird sodann vollumfänglich an seiner seitlichen Begrenzung 3 mit dem Rahmen 5, 6 luftdicht und schwingungsisoliert ummantelt und sodann in die vorgesehene Einbaulage des luftführenden Kanals des Gehäuses der Klimaanlage eingebracht.

Zur Ummantelung ist der Rahmen ein Standardrahmen 5, von welchem der Verdampfer 2 aufgenommen wird und sodann durch Spritzgießen eingeschlossen wird. In diesem Falle werden die Einsätze 7 also durch ein den Verdampfer umgebenes Spritzgussteil gebildet.

Gemäß einem Vergleichsbeispiel ist der Rahmen ein Faltrahmen 6, welcher gegeneinander bewegliche Schenkel 13 aufweist. Der Zusammenbau mit einem solchen Faltrahmen 6 wird mit Bezug zu den Figuren 4A und 4B nun näher erläutert. In diesem Vergleichsbeispiel ist der Faltrahmen 6 vierschenklig und aus einem harten Kunststoff, z.B. Polypropylen. Benachbarte Schenkel 13 sind durch Filmscharniere 15 aus demselben Material einstückig miteinander verbunden. Alternativ kann auch auf ein oder zwei der Filmscharniere 15 verzichtet werden und die Verbindung der jeweiligen Schenkel 13 rechtwinklig starr ausgeführt sein (z.B. zwei zueinander faltbare "L"-Formen oder eine "U"-Form mit einem beweglichen Schenkel 13 zum Schließen (nicht dargestellt).

Zum Fertigstellen der Zusammenbauanordnung 1 wird an die Innenseite des Faltrahmens 6 ein der Form des Verdampfers 2 entsprechender Einsatz 7 (nicht dargestellt) eingesetzt und die Unterkante des Verdampfers 2 an den entsprechenden Schenkel 13C angelegt. Je nach Ausgestaltung kann der Einsatz 7 separat befestigt oder zumindest vorläufig fixiert werden, sodass er wenigstens bei den nachfolgenden Zusammenbauschritten nicht verrutscht oder herausfällt.

In einer mit S1 dargestellten Schwenkbewegung wird der rechte Schenkel 13D an den Verdampfer 2 herangeklappt, sodass die Abdeckung 14 den Anschlussblock 4 passgenau abdeckt. Auch hier können provisorische Halte- oder Fixiervorrichtungen vorgesehen sein, um ein Verrutschen des so geschlossenen Schenkels 13D zu vermeiden.

Mit der nachfolgenden Schwenkbewegung S2 werden die beiden verbleibenden Schenke! 13A, 13B an die linke Kante des Verdampfers 2 herangeklappt, bis der Schenkel 13B an der linken Kante des Verdampfers anliegt. Zuletzt wird durch eine Schließbewegung S3 mit dem Schenkel 13A an die obere Kante der viereckige Faltrahmen 6 vollständig ummantelt (siehe Fig. 4B), wobei der Schenkel 13A und 13D in geeigneter Weise fest verbunden werden, beispielsweise mithilfe von Rastmitteln (nicht dargestellt). Durch das Schließen des Faltrahmens 6 werden die Einsätze 7 luftdicht und schwingungsisolierend zwischen dem Faltrahmen 6 und dem Verdampfer 2 eingequetscht.

Die so erhaltene Zusammenbauanordnung 1 kann dann in die entsprechend vorgesehene Standardlücke im Luftkanal 8 des Gehäuses der Kraftfahrzeugklimaanlage eingebaut werden.

### Patentansprüche für folgende(n) Vertragsstaat(en) : AL, AT, BE, BG, CH, CY, CZ, DK, EE, ES, FI, FR, GB, GR, HR, HU, IE, IS, IT, LI, LT, LU, LV, MC, MK, MT, NL, ND, PL, PT, RO, RS, SE, SI, SK, SM, TR

Die vorliegende Erfindung betrifft eine Zusammenbauanordnung eines Wärmetauschers für den Einbau in das Gehäuse einer Klimaanlage eines Kraftfahrzeugs. Die Zusammenbauanordnung umfasst einen Wärmetauscher, dessen Außenform durch eine Lufteintrittsseite, eine rückseitig dazu parallel gelegene Luftaustrittsseite und eine seitlich dazu umlaufende Begrenzung definiert ist, und einen Dichtungszusammenbau, mittels welchem die seitliche Begrenzung des Wärmetauschers luftdicht und schwingungsisoliert in einem luftführenden Kanal des Gehäuses der Klimaanlage einbaubar ist. Die vorliegende Erfindung betrifft ferner ein Verfahren zum Zusammenbauen einer Kraftfahrzeugklimaanlage mit einer solchen Zusammenbauanordnung.

Für Kraftfahrzeugklimaanlagen werden verschiedene Arten von Wärmetauschern verbaut, beispielsweise Verdampfer und Kondensatoren eines Kältemittelkreislaufs, welche für einen Kühlbetrieb, Wärmepumpenbetrieb und/oder Entfeuchtungsbetrieb eingesetzt werden können. Zudem sind auch fluidbasierte Wärmetauscher bekannt. Hierzu zählen beispielsweise Heizwärmetauscher, welche von dem Kühlwasser des Motors durchströmt werden, oder Kühlwärmetauscher, welche in einem Sekundärkeislauf von einem gekühlten, beispielsweise wasserbasierten Kühlmittel durchströmt werden, welches seinerseits mit einem Kältemittel-Primarkreislauf in wärmetauschendem Kontakt steht.

Es kommt regelmäßig vor, dass für einen bestimmten Kraftfahrzeugtyp je nach Ausstattung oder Zielmarkt eine unterschiedliche Klimatisierungsanforderung vorliegt, sodass ggf. mehrere Varianten unterschiedlicher Leistungsklasse in einer an sich sonst gleichartigen Klimaanlage zum Einsatz kommen müssen. Ferner werden für unterschiedliche Märkte gegebenenfalls jeweils Kältemittelkreisläufe mit unterschiedlichem Kältemittel - z.B. R744 alternativ zu R1234yf - eingesetzt, verbindlich vorgeschrieben oder deren Verwendung untersagt. In diesen Fällen können die verwendeten Wärmetauscher selbst bei gleicher Funktion und/oder gleicher Leistungsklasse in unterschiedlichen Zielmärten voneinander abweichende Größen (d.h. Breiten, Höhen und/oder Dicken) aufweisen.

Um dieser Variantenvielfalt zu begegnen, sind unter anderem diverse Aufnahmevorrichtungen sowie Distanzelemente und Einsätze zum Anpassen an die unterschiedliche Größe der Wärmetauschervarianten bekannt, wie dies z.B. in der DE 10 2012 218 089 A1 beschrieben ist. Es muss bei einer solchen Anpassung jedoch außerdem beachtet werden, dass der Wärmetauscher im luftführenden Kanal des Gehäuses der Kraftfahrzeugklimaanlage in geeigneter Weise abgedichtet und schwingungsentkoppelt werden muss. Die Konstruktion einer zufriedenstellenden Schwingungsentkopplung und Luftdichtigkeit am Rande des Wärmetauschers erfordert zumeist einen erheblichen Entwicklungsaufwand.

In der DE 199 18 167 A1 wird vorgeschlagen, zur körperschallisolierten Lagerung und Abdichtung gegen Leckluft einen Wärmetauscher mit einem Abdichtelement aus Partikelschaum zu umgeben, wobei einzelne mit einander verbundene Abschnitte mittels Filmscharnieren um den Wärmetauscher gefaltet werden können.

Es ist die Aufgabe der vorliegenden Erfindung, eine Zusammenbauanordnung der eingangs genannten Art bereitzustellen, welche eine einfache Montage der Kraftfahrzeugklimaanlage unterstützt und bei welcher insbesondere die Verwendung verschiedener Varianten von Wärmetauschern mit möglichst wenig Mehraufwand verbunden ist.

Diese Aufgabe wird durch eine Zusammenbauanordnung mit den Merkmalen des Anspruchs 1 gelöst. Vorteilhafte Aus- und Weiterbildungen ergeben sich aus den abhängigen Ansprüchen. Die einstückige und vollumfängliche Ummantelung ermöglicht es, den umfänglichen Rand der Zusammenbauanordnung bereits an die physische Form des luftführenden Kanals im Gehäuse der Klimaanlage in einem Stück vorzusehen. Dies erlaubt nicht nur eine einfache Montage, sondern reduziert auch mögliche Anpassungen zum luftdichten Abschließen der Zusammenbauanordnung gegenüber dem luftführenden Kanal. Ergebnisse von früheren Entwicklungen für die Dichtung und Schwingungsentkopplung können ggf. wiederverwendet werden. Außerdem kann durch das einstückige Außenteil die Teileanzahl reduziert werden, welches die Handhabung bei der Herstellung und Vormontage vereinfacht.

Vollumfänglich bedeutet im Sinne der Erfindung, dass der Wärmetauscher entlang der seitlichen Begrenzung zusammenhängend von dem Dichtungszusammenbau umgeben ist. Dabei können aber unter anderem die Zuleitungen zum oder die Ableitungen aus dem Wärmetauscher lokal den Dichtungszusammenbau lochartig oder schlitzartig durchbrechen.

Gemäß einer ersten Ausführungsform der Erfindung umfasst der Dichtungszusammenbau einen Standardrahmen, in welchem der Wärmetauscher durch Spritzgießen eingeschlossen ist. Das Einspritzen ist ein einfacher Verfahrensschritt, durch welchen auf weitere manuelle Montageschritte zur Fertigstellung des im Dichtungszusammenbau dicht und schwingungsisoliert integrierten Wärmetauschers verzichtet werden kann. Als weiterer Schritt bedarf es lediglich dem Einpassen der so erhaltenen Zusammenbauanordnung im Luftkanal.

Gemäß einer zweiten Ausführungsform der Erfindung ist der Außenteil des Dichtungszusammenbaus ein auf- und zusammenklappbarer Rahmen, welcher gegeneinander bewegliche Schenkel aufweist. Der Rahmen kann beispielsweise aus vier geraden Schenkeln für je eine Kante des Wärmetauschers bestehen, wobei alle Schenkel gegeneinander beweglich sind. Alternativ kann aber auch nur einer oder zwei der Schenkel gerade sein und der restliche Teil als L-förmiger oder U-förmiger Schenkel starr ausgebildet sein. Diese zweite Ausführungsform ermöglicht einerseits eine einfache Montage durch Herumlegen und Zusammenklappen des Rahmens, andererseits kann der Rahmen ggf. wieder geöffnet und der ummantelte Wärmetauscher ausgetauscht werden.

Gemäß einer vorteilhaften Ausgestaltung können wenigstens zwei benachbarte Schenkel des Rahmens durch Filmscharniere miteinander verbunden sein. Dies erlaubt eine einfache Gelenkbildung aus demselben Material.

Gemäß der zweiten Ausführungsform ist vorgesehen, dass der Dichtungszusammenbau zusätzlich wenigstens einen Einsatz aufweist, welcher in die Innenseite des Außenteils einsetzbar ist und in zusammengebautem Zustand fest und dicht zwischen dem Außenteil und dem Wärmetauscher angeordnet ist. Hierdurch lässt sich eine leichte Anpassbarkeit an verschiedene Varianten von Wärmetauschern erreichen. Bei einer Weiterentwicklung einer bestehenden Klimaanlage kann das bisherige Dichtungs- und Schwingungsentkopplungskonzept gegenüber dem luftführenden Kanal der Klimaanlage übernommen werden und lediglich die Dichtung und die Schwingungsentkopplung gegenüber der Innenseite des Rahmens an einen neu zu verwendenden Wärmetauscher angepasst werden. Ein solcher Einsatz besteht vorteilhafterweise aus einem elastischen Material, z.B. einem Formschaum.

Der Standardrahmen oder der zusammenklappbare Rahmen sind typischerweise aus einem harten, unelastischem Material, z.B. aus Polypropylen, wobei aber ggf. auch formstabile aber weichere Materialien wie z.B. Formschaum verwendet werden können. Insbesondere können die Rahmen aus einer Kombination aus verschiedenen Materialien, elastischen wie unelastischen Elementen bestehen.

Der Außenteil des Dichtungszusammenbaus weist typischerweise eine im Wesentlichen ebene Oberfläche auf, sodass er sich an die typischerweise auch ebenen Kanalwandungen des luftführenden Kanals der Klimaanlage anpasst. Insbesondere kann eine ebene und auch glatte Oberfläche vorgesehen sein, um ein möglichst kraftsparendes Einschieben in den luftführenden Kanal der Klimaanlage zu ermöglichen. Gemäß einer Weiterbildung der Erfindung ist dabei vorgesehen, dass der Außenteil des Dichtungszusammenbaus ein entlang der seitlichen Begrenzung laufendes Nut-Feder-Mittel aufweist, welches an ein entsprechendes Nut-Feder-Mittel in dem luftführenden Kanal des Gehäuses der Klimaanlage angepasst ist. Hierdurch wird bereits beim Einschieben die ggf. benötigte Luftdichtigkeit zwischen Zusammenbauanordnung und der Innenwand des Klimagehäuses erreicht. Die Nut-Feder-Verbindung kann dabei umlaufend oder ggf. auch unterbrochen sein. Die Nut kann entweder in der Außenseite des Dichtungszusammenbaus oder in der Wandung des Klimageräts vorgesehen sein. Es können auch zwei oder mehrere parallel verlaufende Nut-Feder-Verbindungen vorgesehen sein.

Ein Verfahren zum Zusammenbauen einer Kraftfahrzeugklimaanlage kann nun folgende aufeinanderfolgende Schritte umfassen: Bestimmen einer Ziel-Außenform eines Dichtungszusammenbaus, welche für den luftdichten und schwingungsisolierten Einbau eines Wärmetauschers in Bezug auf eine vorgesehene Einbaulage in einen luftführenden Kanal des Gehäuses einer Klimaanlage geeignet ist. Nachfolgend ein vollumfängliches Ummanteln wenigstens der seitlichen Begrenzung des Wärmetauschers mit einem einstückigen Dichtungszusammenbau und anschließendem luftdichten und schwingungsisolierten Einbauen des mit dem Dichtungszusammenbau ummantelten Wärmetauschers in die vorgesehene Einbaulage des luftführenden Kanals des Gehäuses der Klimaanlage.

Optional umfasst das vollumfängliche Ummanteln des Wärmetauschers folgenden Schritt: Das Aufnehmen des Wärmetauschers in einem Standardrahmen und das Einschließen des Wärmetauschers in dem Standardrahmen mittels Spritzgießen.

Alternativ dazu ist bei dem Verfahren optional vorgesehen, dass für das vollumfängliche Ummanteln ein auf- und zusammenklappbarer Rahmen mit gegeneinander beweglichen Schenkeln verwendet wird, vor dem vollumfänglichen Ummanteln wenigstens ein Einsatz in die Innenseite des Rahmens eingesetzt wird und beim Zusammenklappen des Rahmens der wenigstens eine Einsatz fest und dicht zwischen dem Rahmen und dem Wärmetauscher angeordnet wird.

Die Erfindung wird nun anhand von Ausführungsbeispielen und mit Bezug zu den Figuren näher erläutert.
- Die Figuren 1A- 1B: zeigen schematisch den Aufbau einer Zusammenbauanordnung eines Wärmetauschers gemäß einem Ausführungsbeispiel der Erfindung in zwei verschiedenen seitlichen Schnittebenen,
- die Figuren 2A - 2C: zeigen schematisch verschiedene Wärmetauscher in demselben Außenteil des Dichtungszusammenbaus gemäß Ausführungsbeispielen der Erfindung,
- die Figuren 3A - 3B: zeigen schematisch verschiedene Nut-Feder-Mittel, wie diese gemäß Ausführungsvarianten der Erfindung vorgesehen sind, und
- die Figuren 4A - 4B: zeigen Verfahrensschritte des Zusammenbaus einer erfindungsgemäßen Zusammenbauanordnung.

Die folgenden Ausführungsbeispiele zeigen als Wärmetauscher verschiedene Arten von Verdampfern. Die Erfindung ist jedoch nicht auf Verdampfer beschränkt, sondern kann auch auf beliebig andere Wärmetauscher, wie beispielsweise Kondensatoren oder Heizwärmetauscher, angewendet werden. Die unten im Zusammenhang mit einem Verdampfer erläuterten Merkmale und Verfahrensschritte lassen sich somit auch auf diese anderen Typen von Wärmetauschern übertragen.

In der Figur 1A ist schematisch der Aufbau einer Zusammenbauanordnung 1 eines Verdampfers 2 gemäß einem Ausführungsbeispiel der Erfindung dargestellt. Die Figur 1A zeigt dabei einen seitlichen Schnitt durch die Zusammenbauanordnung 1 in der Nähe der seitlichen Begrenzung 3 des Verdampfers 2 (mix der vorgesehenen Lufteintrittsseite L-EIN auf der linken Seite und der Luftaustrittsseite L-AUS auf der rechten Seite). Die seitliche Begrenzung 3 wird dabei typischerweise von vier geradlinigen Seiten gebildet. Der Verdampfer 2 ist beispielsweise an den Seiten durch geradlinige, ebene Seitenbleche bzw. oben und unten durch je einen abgerundeten Sammeltank gebildet. Ferner tritt aus der seitlichen Umrandung ein Anschlussblock 4 für die Zuleitung in und die Ableitung aus dem Verdampfer 2 hervor.

Erfindungsgemäß ist die seitliche Begrenzung 3 des Verdampfers 2 einstückig und vollumfänglich mit einem Rahmen 5, 6 ummantelt. Während durch die Schnittansicht in der Fig. 1A nur die Ober- und Unterseite dieses Rahmens 5, 6 sichtbar sind, ist in der Seitenansicht gemäß Fig. 1B zumindest auch der eine Seitenabschnitt dieses Rahmens 5, 6 zu sehen. Die zeichnerisch zugewandte Seite des Rahmens 5, 6 weist eine kleine Öffnung auf, welche in zusammengebautem Zustand durch den Anschlussblock 4 durchbrochen wird.

In dem dargestellten Ausführungsbeispiel weist der Rahmen 5, 6 an der Ober- und Unterseite, oder optional auch umlaufend an den Seitenabschnitten, ein Nut-Feder-Mittel 9, 10 auf, dessen Funktion weiter unten mit Bezug zu den Fig. 3A und 3B noch näher erläutert wird.

In den Figuren 2A - 2C ist schematisch dargestellt, wie verschiedene Verdampfer-Typen in demselben Rahmen 5, 6 luftdicht und schwingungsisoliert eingebaut werden können. Die Verdampfer 2A, 2B sind jeweils Verdampfer für einen Kältemittelkreislauf mit R1234yf, aber unterschiedlicher Größe und Leistungsklasse. Der Verdampfer 2A hat im gezeigten Beispiel eine Breite von 50mm, der Verdampfer 2B hingegen nur 38mm. Der Verdampfer 2C ist ein Verdampfer für einen Kältemittelkreislauf mit R744. Dieser besitzt im Gegensatz zu den beiden zuvor genannten Verdampfern 2A, 2B einen anderen Aufbau und eine andere Höhe und Breite. Mithilfe des Rahmens 5, 6 ist nun eine Anpassung an diese verschiedene Größen einfach beherrschbar. Die Anpassung der Zusammenbauanordnung 1 nach außen zum luftdicht und schwingungsisolierten Einpassen in den Luftkanal einer Kraftfahrzeugklimaanlage muss nur einmal für alle drei Typen gemacht werden. Damit ist das Bereitstellen von Klimaanlagen mit Bestückungen verschiedener Verdampfer 2A - 2C wenig entwicklungsintensiv. Ebenso fällt ein Typenwechsel von einem bestehenden Verdampfer, z.B. des Typs 2A, auf einen Nachfolge-Verdampfer, z.B. des Typs 2B oder 2C, ohne größeren Entwicklungsaufwand relativ leicht.

Die Anpassung an diese verschiedenen Verdampfer-Typen 2A - 2C erfolgt nun zwischen der umlaufenden Begrenzung 3 des jeweiligen Verdampfers 2A - 2C und der Innenseite des Rahmens 5, 6 statt. Dazu sind Einlagen 7A - 7C vorgesehen, welche zwischen dem jeweiligen Verdampfer 2A - 2C und dem Rahmen 5, 6 angebracht werden und den Verdampfer 2A - 2C fest und luftdicht in dem Rahmen 5, 6 einschließen. Im gezeigten Beispiel sind die Einsätze 7A - 7C aus Formschaum hergestellt, wobei allgemein auch andere Materialien verwendbar sind. Es können beispielsweise auch Einsätze 7 aus einer Kombination von elastischen und harten Kunststoffen bereitgestellt werden.

Die Außenseite des Rahmens 5, 6 weist in den gezeigten Ausführungsbeispielen eine im Wesentlichen ebene Oberfläche auf. Sie ist insbesondere glatt und typischerweise aus demselben oder ähnlichen Material wie der das Gehäuse für die luftführenden Kanäle der Kraftfahrzeugklimaanlage. Der Rahmen ist beispielsweise auf Polypropylen (PP).

In den Fig. 3A - 3B wird die Funktion der Nut-Feder-Mittel 9 - 12 näher erläutert. Um eine vereinfachte Montage der Zusammenbauanordnung 1 im Gehäuse der Klimaanlage zu ermöglichen, sind an einer oder an mehreren Seiten des Rahmens 5, 6 und an der entsprechenden Stelle an der Innenseite des Luftkanals 8 Nuten 9, 11 bzw. Federn 10, 12 vorgesehen.

In einer Ausführungsvariante gemäß Fig. 3A ist an der Außenseite der Zusammenbauanordnung 1 eine Nut 9 vorgesehen, welche sich an der Oberseite und ggf. auch an den anderen Seiten geradlinig erstreckt. Passgenau dazu ist im Luftkanal 8 eine Feder 10 vorgesehen. Die Zusammenbauanordnung 1 des Verdampfers 2 im Rahmen 5, 6 kann nun durch einfaches seitliches Einschieben in die geeignete Position im Luftkanal 8 erfolgen.

Alternativ zu der Figur 3A ist eine weitere Ausführungsvariante in der Fig. 3B dargestellt. Gemäß dieser Ausführungsvariante weist die Rahmenaußenseite zwei im Profil halbkreisförmige Federn 12 auf, welche in entsprechend positionierte Nuten 11 im Luftkanal 8 einbringbar sind. Die Federn 12 können dabei aus einem elastischen Material sein und durch leichten Andruck in die Nuten 11 für eine verbesserte Dichtigkeit sorgen.

Die mit Bezug zu den Fig. 3A und 3B gezeigten Nut-Feder-Verbindungen zwischen Zusammenbauanordnung 1 und Luftkanal 8 können entsprechend modifiziert und einzelne Merkmale entsprechend miteinander kombiniert werden. Insbesondere können mehrere parallel zueinander verlaufende Nuten/ Feder vorgesehen sein oder auch Nut und Feder an einer Oberfläche abwechseln. Je nach Bedarf können auch weitere Dicht- und Schwingungsentkopplungsmittel zwischen der Innenwand des Luftkanals 8 und der Zusammenbauanordnung 1 vorgesehen sein.

Durch den Rahmen 5, 6 ist die Außenform der Zusammenbauanordnung 1 definiert. Wie bereits oben erwähnt ermöglicht dies einerseits, auf die Ergebnisse früherer Entwicklungen von Klimaanlagen zurückzugreifen und damit den Entwicklungsaufwand bzgl. Der Dichtungs- und Schwingungsentkopplung zu reduzieren. Dazu wird die Ziel-Außenform des Dichtungszusammenbaus beispielsweise von einem Vorgängerprojekt übernommen bzw. entsprechend re-dimensioniert. Wenn die Außengeometrie des Dichtungszusammenbaus und die Kanalwandgeometrie an der vorgesehenen Einbaulage gleich ist, muss zumindest an dieser Berührfläche nichts mehr angepasst werden. Der Verdampfer 2 wird sodann vollumfänglich an seiner seitlichen Begrenzung 3 mit dem Rahmen 5, 6 luftdicht und schwingungsisoliert ummantelt und sodann in die vorgesehene Einbaulage des luftführenden Kanals des Gehäuses der Klimaanlage eingebracht.

Gemäß einer ersten Ausführungsalternative zur Ummantelung ist der Rahmen ein Standardrahmen 5, von welchem der Verdampfer 2 aufgenommen wird und sodann durch Spritzgießen eingeschlossen wird. In diesem Falle werden die Einsätze 7 also durch ein den Verdampfer umgebenes Spritzgussteil gebildet.

Gemäß einer zweiten Ausführungsalternative ist der Rahmen ein Faltrahmen 6, welcher gegeneinander bewegliche Schenkel 13 aufweist. Der Zusammenbau mit einem solchen Faltrahmen 6 wird mit Bezug zu den Figuren 4A und 4B nun näher erläutert. In diesem Ausführungsbeispiel ist der Faltrahmen 6 vierschenklig und aus einem harten Kunststoff, z.B. Polypropylen. Benachbarte Schenkel 13 sind durch Filmscharniere 15 aus demselben Material einstückig miteinander verbunden. Alternativ kann auch auf ein oder zwei der Filmscharniere 15 verzichtet werden und die Verbindung der jeweiligen Schenkel 13 rechtwinklig starr ausgeführt sein (z.B. zwei zueinander faltbare "L"-Formen oder eine "U"-Form mit einem beweglichen Schenkel 13 zum Schließen (nicht dargestellt).

Zum Fertigstellen der Zusammenbauanordnung 1 wird an die Innenseite des Faltrahmens 6 ein der Form des Verdampfers 2 entsprechender Einsatz 7 (nicht dargestellt) eingesetzt und die Unterkante des Verdampfers 2 an den entsprechenden Schenkel 13C angelegt. Je nach Ausgestaltung kann der Einsatz 7 separat befestigt oder zumindest vorläufig fixiert werden, sodass er wenigstens bei den nachfolgenden Zusammenbauschritten nicht verrutscht oder herausfällt.

In einer mit S1 dargestellten Schwenkbewegung wird der rechte Schenkel 13D an den Verdampfer 2 herangeklappt, sodass die Abdeckung 14 den Anschlussblock 4 passgenau abdeckt. Auch hier können provisorische Halte- oder Fixiervorrichtungen vorgesehen sein, um ein Verrutschen des so geschlossenen Schenkels 13D zu vermeiden.

Mit der nachfolgenden Schwenkbewegung S2 werden die beiden verbleibenden Schenkel 13A, 13B an die linke Kante des Verdampfers 2 herangeklappt, bis der Schenkel 13B an der linken Kante des Verdampfers anliegt. Zuletzt wird durch eine Schließbewegung S3 mit dem Schenkel 13A an die obere Kante der viereckige Faltrahmen 6 vollständig ummantelt (siehe Fig. 4B), wobei der Schenkel 13A und 13D in geeigneter Weise fest verbunden werden, beispielsweise mithilfe von Rastmitteln (nicht dargestellt). Durch das Schließen des Faltrahmens 6 werden die Einsätze 7 luftdicht und schwingungsisolierend zwischen dem Faltrahmen 6 und dem Verdampfer 2 eingequetscht.

Die so erhaltene Zusammenbauanordnung 1 kann dann in die entsprechend vorgesehene Standardlücke im Luftkanal 8 des Gehäuses der Kraftfahrzeugklimaanlage eingebaut werden.

## Patentansprüche (Patentansprüche für folgende(n) Vertragsstaat(en): DE)

1. Zusammenbauanordnung (1) eines Wärmetauschers (2) für den Einbau in das Gehäuse einer Klimaanlage eines Kraftfahrzeugs, umfassend
- einen Wärmetauscher (2), dessen Außenform durch eine Lufteintrittsseite (L-EIN), eine rückseitig dazu parallel gelegene Luftaustrittsseite (L-AUS) und eine seitlich dazu umlaufende Begrenzung (3) definiert ist, und
- einen Dichtungszusammenbau (5; 6, 7), mittels welchem die seitliche Begrenzung (3) des Wärmetauschers (2) luftdicht und schwingungsisoliert in einem luftführenden Kanal (8) des Gehäuses der Klimaanlage einbaubar ist,
**dadurch gekennzeichnet, dass**
der Außenteil des Dichtungszusammenbaus (5; 6) wenigstens die seitliche Begrenzung (3) des Wärmetauschers (2) einstückig und vollumfänglich ummantelt, wobei der Dichtungszusammenbau einen Standardrahmen (5) umfasst, in welchem der Wärmetauscher (2) durch Spritzgießen eingeschlossen ist.

2. Zusammenbauanordnung nach Anspruch 1,
**dadurch gekennzeichnet, dass** der Außenteil des Dichtungszusammenbaus (5; 6) ein entlang der seitlichen Begrenzung laufendes Nut-Feder-Mittel (9, 10; 11, 12) aufweist, welches an ein entsprechendes Nut-Feder-Mittel (9, 10; 11, 12) in dem luftführenden Kanal (8) des Gehäuses der Klimaanlage angepasst ist.

## Patentansprüche (Patentansprüche für folgende(n) Vertragsstaat(en): AL, AT, BE, BG, CH, CY, CZ, DK, EE, ES, FI, FR, GB, GR, HR, HU, IE, IS, IT, LI, LT, LU, LV, MC, MK, MT, NL, NO, PL, PT, RO, RS, SE, SI, SK, SM, TR)

1. Zusamrüenbauanordnung (1) eines Wärmetauschers (2) für den Einbau in das Gehäuse einer Klimaanlage eines Kraftfahrzeugs, umfassend
- einen Wärmetauscher (2), dessen Außenform durch eine Lufteintrittsseite (L-EIN), eine rückseitig dazu parallel gelegene Luftaustrittsseite (L-AUS) und eine seitlich dazu umlaufende Begrenzung (3) definiert ist, und
- einen Dichtungszusammenbau (5; 6, 7), mittels welchem die seitliche Begrenzung (3) des Wärmetauschers (2) luftdicht und schwingungsisoliert in einem luftführenden Kanal (8) des Gehäuses der Klimaanlage einbaubar ist, wobei
- der Außenteil des Dichtungszusammenbaus (5; 6) wenigstens die seitliche Begrenzung (3) des Wärmetauschers (2) einstückig und vollumfänglich ummantelt, **dadurch gekennzeichnet, dass**
- entweder der Dichtungszusammenbau einen Standardrahmen (5) umfasst, in welchem der Wärmetauscher (2) durch Spritzgießen eingeschlossen ist,
- oder der Außenteil des Dichtungszusammenbaus ein auf- und zusammenklappbarer Rahmen (6) ist, welcher gegeneinander bewegliche Schenkel (13) aufweist, und der Dichtungszusammenbau wenigstens einen Einsatz (7A; 7B; 7C) aufweist, welcher in die Innenseite des Außenteils einsetzbar ist und in zusammengebautem Zustand fest und dicht zwischen dem Außenteil und dem Wärmetauscher (2A; 2B; 2C) angeordnet ist.

2. Zusammenbauanordnung nach Anspruch 1,
**dadurch gekennzeichnet, dass** wenigstens zwei benachbarte Schenkel (13) des auf-und zusammen Klappbarer Rahmens (6) durch Filmscharniere (15) miteinander verbunden sind.

3. Zusammenbauanordnung nach Anspruch 1 oder 2,
**dadurch gekennzeichnet, dass** der Einsatz (7) aus einem elastischen Material besteht.

4. Zusammenbauanordnung nach einem der vorangegangenen Ansprüche,
**dadurch gekennzeichnet, dass** der Außenteil des Dichtungszusammenbaus (5; 6) ein entlang der seitlichen Begrenzung laufendes Nut-Feder-Mittel (9, 10; 11, 12) aufweist, welches an ein entsprechendes Nut-Feder-Mittel (9, 10; 11, 12) in dem luftführenden Kanal (8) des Gehäuses der Klimaanlage angepasst ist.

## Claims (Claims for the following Contracting State(s): DE)

1. Assembly arrangement (1) of a heat exchanger (2) for mounting into the housing of a climatization device of a motor vehicle, comprising
- a heat exchanger (2), whose outside form is defined by an air inlet face (L-EIN), an air outlet face (L-AUS) backwardly disposed thereof in parallel and a peripheral margin (3) sidewardly disposed thereof, and
- a sealing arrangement (5; 6, 7) by means of which the peripheral margin (3) of the heat exchanger (2) is mountable in an air-tight manner and isolated against vibrations within an air guiding duct (8) of the housing of the climatization device,
**characterized in that**
the outer part of the sealing arrangement (5; 6) at least encases the peripheral margin (3) of the heat exchanger (2) entirely and in one piece, wherein the sealing arrangement comprises a standard frame (5) in which the heat exchanger (2) is enclosed by injection moulding.

2. Assembly arrangement (1) according to one claim 1,
**characterized in that** the outer part of the sealing arrangement (5; 6) has a tongue-groove-means (9, 10; 11, 12) running alongside the peripheral margin, and which is adapted to a respective tongue-groove-means (9, 10; 11, 12) within the air guiding duct (8) of the housing of the climatization device.

## Claims (Claims for the following Contracting State(s): AL, AT, BE, BG, CH, CY, CZ, DK, EE, ES, FI, FR, GB, GR, HR, HU, IE, IS, IT, LI, LT, LU, LV, MC, MK, MT, NL, NO, PL, PT, RO, RS, SE, SI, SK, SM, TR)

1. Assembly arrangement (1) of a heat exchanger (2) for mounting into the housing of a climatization device of a motor vehicle, comprising
- a heat exchanger (2), whose outside form is defined by an air inlet face (L-EIN), an air outlet face (L-AUS) backwardly disposed thereof in parallel and a peripheral margin (3) sidewardly disposed thereof, and
- a sealing arrangement (5; 6, 7) by means of which the peripheral margin (3) of the heat exchanger (2) is mountable in an air-tight manner and isolated against vibrations within an air guiding duct (8) of the housing of the climatization device, wherein
- the outer part of the sealing arrangement (5; 6) at least encases the peripheral margin (3) of the heat exchanger (2) entirely and in one piece,
**characterized in that**
- either the sealing arrangement comprises a standard frame (5) in which the heat exchanger (2) is enclosed by injection moulding,
- or the outer part of the sealing arrangement is a folding frame (6) comprising legs (13) movable relative to each other, and the sealing arrangement at least has an inlay (7A; 7B; 7C), which is insertable at the inner face of the outer part and which is arranged firmly and tightly in assembled state between the outer part and the heat exchanger (2A; 2B; 2C).

2. Assembly arrangement (1) according to claim 1,
**characterized in that** at least two adjacent legs (13) of the folding frame (6) are connected with each other via film hinges (15).

3. Assembly arrangement (1) according to claim 1 or 2,
**characterized in that** the inlay (7) consists of an elastic material.

4. Assembly arrangement (1) according to one of the preceding claims,
**characterized in that** the outer part of the sealing arrangement (5; 6) has a tongue-groove-means (9, 10; 11, 12) running alongside the peripheral margin, and which is adapted to a respective tongue-groove-means (9, 10; 11, 12) within the air guiding duct (8) of the housing of the climatization device.

## Revendications (Revendications pour l'(les) Etat(s) contractant(s) suivant(s): DE)

1. Agencement d'assemblage (1) d'un échangeur de chaleur (2) destiné à être monté dans le boîtier d'un dispositif de climatisation d'un véhicule à moteur, comprenant :
un échangeur de chaleur (2) dont la forme extérieure est définie par une face d'entrée d'air (L-EIN), une face de sortie d'air (L-AUS) disposée à l'arrière et parallèlement à cette dernière et une paroi périphérique (3) disposée latéralement par rapport à celle-ci, et
un agencement d'étanchéité (5 ; 6, 7) au moyen duquel la paroi périphérique (3) de l'échangeur de chaleur (2) peut être montée, d'une manière étanche à l'air et isolée des vibrations, à l'intérieur d'un conduit de guidage d'air (8) du boîtier du dispositif de climatisation,
**caractérisé en ce que** :
la partie externe de l'agencement d'étanchéité (5 ; 6) enferme au moins la paroi périphérique (3) de l'échangeur de chaleur (2) en totalité et d'un seul tenant, dans lequel l'agencement d'étanchéité comprend un bâti standard (5) dans lequel l'échangeur de chaleur (2) est enfermé par moulage par injection.

2. Agencement d'assemblage (1) selon la revendication 1,
**caractérisé en ce que** la partie externe de l'agencement d'étanchéité (5 ; 6) a un moyen de languette - rainure (9, 10 ; 11, 12) s'étendant le long de la paroi périphérique et qui est adapté à un moyen de languette - rainure (9, 10 ; 11, 12) respectif à l'intérieur du conduit de guidage d'air (8) du boîtier du dispositif de climatisation.

## Revendications (Revendications pour l'(les) Etat(s) contractant(s) suivant(s): AL, AT, BE, BG, CH, CY, CZ, DK, EE, ES, FI, FR, GB, GR, HR, HU, IE, IS, IT, LI, LT, LU, LV, MC, MK, MT, NL, NO, PL, PT, RO, RS, SE, SI, SK, SM, TR)

1. Agencement d'assemblage (1) d'un échangeur de chaleur (2) destiné à être monté dans le boîtier d'un dispositif de climatisation d'un véhicule à moteur, comprenant :
un échangeur de chaleur (2) dont la forme extérieure est définie par une face d'entrée d'air (L-EIN), une face de sortie d'air (L-AUS) disposée à l'arrière et parallèlement à cette dernière et une paroi périphérique (3) disposée latéralement par rapport à celle-ci, et
un agencement d'étanchéité (5 ; 6, 7) au moyen duquel la paroi périphérique (3) de l'échangeur de chaleur (2) peut être montée, d'une manière étanche à l'air et isolée des vibrations, à l'intérieur d'un conduit de guidage d'air (8) du boîtier du dispositif de climatisation, dans lequel :
la partie externe de l'agencement d'étanchéité (5 ; 6) enferme au moins la paroi périphérique (3) de l'échangeur de chaleur (2) en totalité et d'un seul tenant,
**caractérisé en ce que** :
l'agencement d'étanchéité comprend un bâti standard (5) dans lequel l'échangeur de chaleur (2) est enfermé par moulage par injection,
ou bien la partie externe de l'agencement d'étanchéité d'un bâti pliant (6) comprenant des pattes (13) mobiles entre elles, et l'agencement d'étanchéité a au moins une incrustation (7A ; 7B ; 7C) qui peut être insérée au niveau de la face interne de la partie externe et qui est agencée fermement et de manière serrée à l'état assemblé entre la partie externe et l'échangeur de chaleur (2A ; 2B ; 2C).

2. Agencement d'assemblage (1) selon la revendication 1,
**caractérisé en ce qu'**au moins deux pattes (13) adjacentes du bâti pliant (6) sont raccordés entre elles via des articulations de film (15).

3. Agencement d'assemblage (1) selon la revendication 1 ou 2,
**caractérisé en ce que** l'incrustation (7) se compose d'un matériau élastique.

4. Agencement d'assemblage (1) selon l'une des revendications précédentes,
**caractérisé en ce que** la partie externe de l'agencement d'étanchéité (5 ; 6) a un moyen de languette - rainure (9, 10 ; 11, 12) s'étendant le long de la paroi périphérique, et qui est adapté à un moyen de languette - rainure (9, 10 ; 11, 12) respectif à l'intérieur du conduit de guidage d'air (8) du boîtier du dispositif de climatisation.
